# EUROPÄISCHE PATENTANMELDUNG

(11) **EP 1 072 615 A1**
(43) Veröffentlichungstag der Anmeldung: **31.01.2001**
(21) Anmeldenummer: 00113374.3
(22) Anmeldetag: 23.06.2000
(51) Int. Cl.: C08F 2/24

(54) **Verwendung von Fettsäureglucamiden als Emulgatoren in der Emulsionspolymerisation**

(30) Priorität: 24.07.1999 DE 19934836
(71) Anmelder: Clariant GmbH, 65929 Frankfurt am Main (DE)
(72) Erfinder: Crass, Gerhard, Dr., 61169 Friedberg (DE); Ahrens, Hendrik, Dr., 49078 Osnabrück (DE)

(57) **Zusammenfassung**

Gegenstand der Erfindung die die Verwendung von Verbindungen der Formel 1 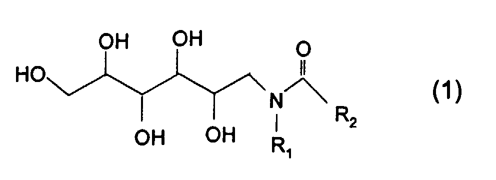 worin
- R₁: ein Alkylrest mit 1 bis 8 Kohlenstoffatomen oder ein Wasserstoffatom, und
- R₂: ein verzweigter, unverzweigter, aromatischer oder ungesättigter Kohlenwasserstoffrest mit einer C-Kettenlänge von C₁-C₂₁ ist,
als Emulgatoren zur Herstellung stabiler Polymerdispersionen in Emulsionspolymerisationen.

## Beschreibung

Die vorliegende Erfindung betrifft die Verwendung von Fettsäureglucamiden als Emulgatoren in Emulsionspolymerisationen.

Fettsäureglucamide werden bisher in Wasch- und Reinigungsformulierungen sowie in der kosmetischen Industrie als Tenside eingesetzt. Sie haben den Vorzug, daß sie aus nachwachsenden Rohstoffen herstellbar sind.

Die für die Emulsionspolymerisation nach dem Stand der Technik eingesetzten Emulgatoren sind anionische und nichtionische Tenside.

Übliche anionische Tenside sind Natriumalkylsulfat, Natriumdodecylbenzolsulfonat, Natriumalkylsulfonat, Natrium- und Ammoniumalkylpolyethylenglykolethersulfate, Natrium- und Ammoniumalkylphenolpolyethylenglykcolethersulfate sowie Alkylpolyethylenglykoletherphosphorsäuremono-, di- und triester und deren Mischungen und Alkylphenolpolyethylenglykoletherphosphorsäuremono-, di- und triester und deren Mischungen.

Als nichtionische Tenside werden üblicherweise Alkylphenolpolyethylenglykolether, Alkylpolyethylenglykolether, Fettsäurepolyethylenglykolether, Ethylen/Propylenglykol Blockpolymere und Sorbitanesterpolyethylenglykolether eingesetzt.

DE-A-42 37 434 offenbart die Verwendung von Glucamid-Detergenzien als Emulgatoren in der Vinylchlorid-Polymerisation zur Herstellung getrockneter Polymere.

Der vorliegenden Erfindung lag die Aufgabe zugrunde, neue Emulgatoren, die für Emulsionspolymerisationen geeignet sind, aufzufinden. Diese Emulgatoren sollten aus nachwachsenden Rohstoffen herstellbar und in der Lage sein, stabile Polymerdispersionen in der Emulsionspolymerisation zu bewirken.

Es wurde nun gefunden, daß mit Fettsäureglucamiden als Emulgatoren in der Emulsionspolymerisation stabile Polymerdispersionen hergestellt werden.

Gegenstand der Erfindung ist somit die Verwendung von Verbindungen der Formel 1 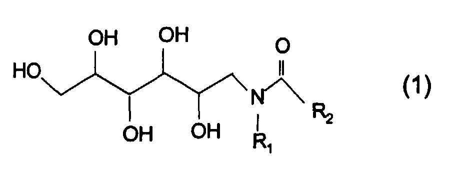 worin
- R₁: ein Alkylrest mit 1 bis 8 Kohlenstoffatomen oder ein Wasserstoffatom, und
- R₂: ein Kohlenwasserstoffrest mit einer C-Kettenlänge von C₁-C₂₁ ist,
als Emulgatoren zur Herstellung stabiler Polymerdispersionen in Emulsionspolymerisationen.

R₁ hat vorzugsweise die Bedeutung H oder C₁-C₆-Alkyl, insbesondere C₂-C₄-Alkyl. R₁ kann geradkettig oder verzweigt sein.

R₂ kann ein verzweigter, unverzweigter, aliphatischer, cycloaliphatischer, aromatischer, gesättigter oder ungesättigter Rest sein, beispielsweise ein Alkyl-, Alkenyl-, Aryl- oder Cycloalkylrest. R₂ hat vorzugsweise die Bedeutung C₈-C₂₀-Alkyl oder -Alkenyl, insbesondere C₁₂-C₁₈-Alkyl oder -Alkenyl. Steht R₂ für einen aromatischen Rest, so ist die Bedeutung Phenyl, C₁-C₄-substituiertes Phenyl, Naphthyl oder Anthracenyl bevorzugt.

Die verwendeten Monomere für die Herstellung von Polymerdispersionen nach dem Emulsionspolymerisationsverfahren sind beispielsweise
- Vinylmonomere wie Carbonsäureester des Vinylalkohols, beispielsweise Vinylacetat, Vinylpropionat, Vinylether der Isononansäure oder der Isodecansäure, Styrol und Stilben,
- olefinisch ungesättigte Carbonsäureester, wie Ethylacrylat, n-Butylacrylat, i-Butylacrylat, Hexylacrylat, 2-Ethylhexylacrylat, Hydroxyethylacrylat sowie die entsprechenden Methacrylsäureester,
- olefinisch ungesättigte Carbonsäuren, wie Acrylsäure, Methacrylsäure und Itaconsäure und ihre Natrium-, Kalium- und Ammoniumsalze,
- olefinisch ungesättigte Sulfonsäuren und Phosphonsäuren und ihre Alkali- und Ammoniumsalze, wie Acrylamidomethylpropansulfonsäure und ihre Alkali- und Ammonium-, Alkylammonium und Hydroxyalkylammoniumsalze, Allylsulfonsäure und ihre Alkali- und Ammoniumsalze, Acryloyloxethylphosphonsäure und ihre Ammonium- und Alkalisalze sowie die entsprechenden Methacrylsäurederivate,
- olefinisch ungesättigte Amine, Ammoniumsalze, Nitrile und Amide, wie Dimethylaminoethylacrylat, Acryloyloxethyltrimethylammoniumhalide, Acrylnitril, N-Methylacrylamid, N-Ethylacrylamid, N-Propylacrylamid sowie die entsprechenden Methacrylsäurederivate und Vinylmethylacetamid,
- Comonomere für die Polymerisation von Carbonsäureestern des Vinylalkohols, olefinisch ungesättigte Carbonsäureester und Styrol wie z.B. Ethylen, Propen, Butene, Penten, 1,3-Butadien, Chloropren, Vinylchlorid, Vinylidenchlorid und Vinylidenfluorid.

In einer besonders bevorzugten Ausführungsform betrifft die Erfindung die Verwendung von Verbindungen der Formel (1) zur Herstellung stabiler Polymerdispersionen in der Polymerisation von ungesättigten Estern. Die ungesättigten Ester können untereinander polymerisiert werden, oder zusammen mit C₂-C₆-Alkenen.

Ungesättigte Ester können Vinylester, Acrylester oder Methacrylester sein. Sie entsprechen beispielsweise den Formeln 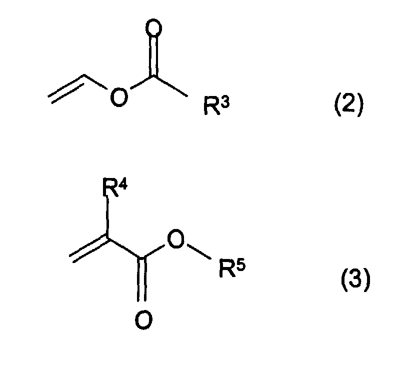 worin R³ und R⁵ unabhängig voneinander für einen C₁-C₂₀-Alkylrest, vorzugsweise C₁-C₁₂-, insbesondere C₁-C₄-Alkylrest stehen, und R⁴ H oder CH₃ bedeutet. Besonders bevorzugte Alkene sind Ethylen und Propylen.

Zur Herstellung der Polymerdispersionen werden die mit Wasser nicht mischbaren Monomere mit Hilfe der erfindungsgemäßen Emulgatoren in der wäßrigen Phase in Form von Mizellen fein verteilt und die radikalische Polymerisationsreaktion durch Initiatoren wie beispielsweise Ammonium-, Natrium- und Kaliumperoxodisulfat gestartet.

Weitere Hilfs- und Zusatzstoffe für die Verwendung mit den erfindungsgemäßen Emulgatoren können Schutzkolloide wie Carboxymethylcellulose, Hydroxyethylcellulose, Methylhydroxypropylcellulose, sowie teil- und vollverseifter Polyvinylalkohol sein.

Eine Übersicht über gängige Verfahren, Tenside und weitere Hilfsmittel der Emulsionspolymerisation geben Peter A. Lovell und Mohamed S. El-Aasser, in "Emulsion Polymerization and Emulsion Polymers", erschienen bei John Wiley and Sons, 1997.

Fettsäureglucamide sind eine Substanzklasse auf Basis nachwachsender Rohstoffe mit sehr guter biologischer Abbaubarkeit und guter Umweltverträglichkeit. Die mit Fettsäureglucamiden hergestellten Polymerdispersionen zeigen eine geringe Koagulatbildung während und nach der Polymerisation und sind stabil gegen Elektrolyte, scherbeständig und lagerstabil.

### Beispiele

Als Beispiele für Fettsäureglucamide wurde N-Methyl-Fettäureglucamid mit einem C_{12/14} Fettsäurekettenschnitt für eine Vinylacetat-Dispersion und eine Reinacrylat-Dispersion eingesetzt.

### 1. Vinylacetat-Dispersion

704 ml Wasser werden in einem Glaskolben vorgelegt und 23 g ®Tylose H 200 YG4 (Hydroxyethylcellulose) , 5,7 g Borax, 20 g ®Emulsogen EPA 073 (Natriumalkylethersulfat), 30 g ®Praepagen V 4778 (N-Methyl C_{12/14}-Acylglucamid) und 2,4 ml Essigsäure zugegeben und gerührt. Anschließend werden 100 ml 1,1 %ige Kaliumperoxodisulfat-Lösung und 120 ml Vinylacetat zudosiert und die Mischung auf 76°C geheizt. Anschließend werden über einen Zeitraum von 3 Stunden 140 ml der 1,1%igen Kaliumperoxodisulfat-Lösung und 600 ml Vinylacetat zudosiert. Nach einer Nachpolymerisationszeit von einer Stunde wird die Dispersion auf Raumtemperatur abgekühlt.

### 2. Reinacrylat-Dispersion

409 ml Wasser werden in einem Glaskolben vorgelegt und 16 g Emulsogen EPA 1954 (Natriumalkylsulfat), 15 g einer 3,75%igen Ammoniumperoxodisulfat-Lösung, 11,8 g n-Butylacrylat, 11,8 g Methylmethacrylat und 0,48 g Methacrylsäure zugegeben und gerührt. Unter Rühren wird die Emulsion auf 80°C geheizt und über 4 Stunden eine Monomeremulsion zudosiert, die aus 534 ml Wasser, 32 g Emulsogen EPA 1954, 7,5 g Praepagen V 4778 (N-Methyl C_{12/14}-Acylglucamid), 240 g n-Butylacrylat, 240 g Methylmethacrylat, 9,6 g Methacrylsäure und 2,85 g Ammoniumperoxodisulfat besteht. Nach vollständiger Dosierung und einer Nachpolymerisation von einer Stunde wird die Polymerdispersion auf Raumtemperatur abgekühlt und mit Ammoniak-Lösung auf pH 8 - 9 eingestellt.

## Patentansprüche

1. Verwendung von Verbindungen der Formel 1 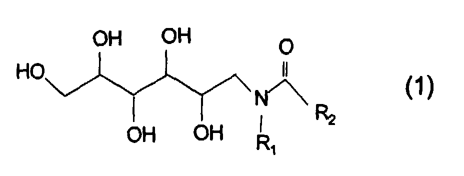 worin
R₁ ein Alkylrest mit 1 bis 8 Kohlenstoffatomen oder ein Wasserstoffatom, und
R₂ ein verzweigter, unverzweigter, aromatischer oder ungesättigter Kohlenwasserstoffrest mit einer C-Kettenlänge von C₁-C₂₁ ist,
als Emulgatoren zur Herstellung stabiler Polymerdispersionen in Emulsionspolymerisationen.

2. Verwendung gemäß Anspruch 1, dadurch gekennzeichnet, daß bei der Emulsionspolymerisation ungesättigte Ester untereinander, oder zusammen mit C₂-C₆-Alkenen polymerisiert werden.
